# EUROPÄISCHE PATENTANMELDUNG

(11) **EP 4 276 724 A1**
(43) Veröffentlichungstag der Anmeldung: **15.11.2023**
(21) Anmeldenummer: 22172236.6
(22) Anmeldetag: 09.05.2022
(51) Int. Cl.: G06Q 30/02

(54) **AUTOMATISCHE PROGNOSE VON WIRKUNGEN EINES MEDIEN-OBJEKTS**

(71) Anmelder: RTL Deutschland GmbH, 50679 Köln (DE)
(72) Erfinder: Egger, Marc, 51399 Burscheid (DE)
(74) Vertreter: Springorum, Harald

(57) **Zusammenfassung**

Computerimplementiertes Verfahren zur automatischen Prognose von Wirkungen eines Medien-Objekts **(MO)** mittels eines computerimplementierte Prognose-Moduls **(PM),** wobei das jeweilige hinsichtlich seiner Wirkungen zu prognostizierende Medien-Objekt **(MO)** einem automatischen Extraktor **(EXT)** zur Analyse zugeführt wird, der hieraus automatisch einen zugehörigen Signaturvektor **(SV)** ermittelt und diesen dem Prognose-Modul **(PM)** zuführt, und das Prognose-Modul **(PM)** anhand des Signaturvektors **(SV)** einen zugehörigen Wirkungsvektor **(WV)** ermittelt, wobei das Prognose-Modul **(PM)** sich eines baumbasierten Vorhersagemodells zur Bestimmung des die jeweiligen Kenngrößen für die Wirksamkeit des jeweiligen Medien-Objekts **(MO)** enthaltenden Wirkungsvektors **(WV)** aus dem die Eigenschaften des jeweiligen Medien-Objekts **(MO)** enthaltenden Signaturvektors **(SV)** bedient und zuvor vermittels eines computerimplementierten Verfahrens zum Training des computerimplementierten Prognose-Moduls **(PM)** zur automatischen Prognose von Wirkungen eines Medien-Objekts **(MO)** nach der vorliegenden Erfindung anhand einer Datenbank von vorrätigen Medien-Objekten **(DB-MO)** denen jeweils ein hinsichtlich der Wirkung des jeweiligen Medien-Objekts als zutreffend bekannter Wirkungsvektor **(BMV)** zugeordnet ist, trainiert wurde sowie vorgenanntes Verfahren zum Training.

## Beschreibung

Die vorliegende Erfindung betrifft die automatische Prognose von Wirkungen eines Medien-Objekts, insbesondere von Filmen oder Videos, wie etwa von Werbespots als Medien-Objekt.

Die Wirkung von Medien-Objekten - wie etwa die Sendung eines Werbespots, um einen diesbezüglich wirtschaftlich relevanten Anwendungsfall zu nennen - zu ermitteln und mit den gewonnenen Erkenntnissen im besten Fall zu steigern ist seit jeher von Interesse für die Produzenten und Anbieter von Medien-Objekten.

Die Lehre auf diesem Gebiet (vgl. hierzu etwa Breyer-Mayländer/Werner, *Handbuch der Medienbetriebslehre*, München 2003, 174ff., 186f.) betont hierbei die Bedeutung von Befragungen, wie etwa bei Verwendung des sogenannten *copy-tests* bzw. entsprechenden Instrumenten zur Ermittlung wichtiger Kenngrößen (vgl. hierzu etwa Breyer-Mayländer/Werner, *a.a.O.*, 186f.), die oft auch als sogenannte *Key Performance Indicators* (KPI's) bezeichnet werden und die die Wirksamkeit eines Medien-Objekts im Hinblick auf die durch den zugehörigen KPI wiedergespiegelte Wirkung als Maßzahl angeben. Dabei werden die entsprechenden Befragungen so ausgelegt, daß sie die Ermittlung der oder des jeweilig interessierenden KPI's erlauben.

Derartige Wirkungsermittlungen sind dabei durchaus nicht auf Werbemaßnahmen beschränkt, sondern können durchaus auch andere Wirkungen im Blick haben. Da Konzeption, Durchführung und Auswertung der jeweiligen Befragung mit erheblichem Aufwand unter Einsatz auch (teuren) wissenschaftlichen Personals verbunden sind, ist deren wirtschaftlich zu vertretender Einsatz aber meist auf das Gebiet der Werbewirkungsforschung beschränkt. Gleichwohl sind auch hier die durch die vorstehend erwähnten unter Einsatz hoch qualifizierter Fachkräfte aus der empirischen Forschung entstehenden Aufwände ganz erheblich und begrenzen deren Einsatz auf das unbedingt Notwendige.

Vor diesem Hintergrund ergibt sich somit die Aufgabe Kenngrößen für die Wirksamkeit eines Medien-Objekts (KPI's) ohne die vorgenannten aufwändigen Verfahren automatisch und ohne menschliches Zutun ermitteln bzw. prognostizieren zu können.

Als Kenngrößen für die Wirksamkeit eines Medien-Objekts (KPI's) kommen dabei insbesondere die in folgender Tabelle aufgelisteten KPI's in Betracht, wobei hier die Erhebungsdaten in Bezug auf die herkömmliche Befragungsmethode den jeweiligen KPI's pro Spot zugeordnet werden. Üblicherweise wird der Befragte dabei gebeten, seine Einschätzung des Medien-Objekts auf einer numerischen Skala anzugeben. Neben der direkten Verwendung der numerischen Befragungsdaten ist dabei auch eine vorherige Binarisierung möglich.

| **Kenngröße (KPI)** | **Herkömmliche Befragungsmethode** |
|---|---|
| Akustische Auffälligkeit | Ist der Spot akustisch auffällig? |
| Attraktivität | Ist der Spot akustisch ansprechend? |
| Außergewöhnlichkeit | Ist der Spot außergewöhnlich? |
| Glaubwürdigkeit | Ist der Spot akustisch glaubwürdig? |
| Wertigkeit | Ist der Spot hochwertig gemacht? |
| Informationsgehalt | Ist der Spot akustisch informativ? |
| Inspiration | Ist der Spot inspirierend? |
| Spannung | Ist der Spot spannend? |
| Originalität | Ist der Spot originell? |
| Kongruenz | Paßt der Spot zur beworbenen Marke? |
| Charakter | Ist der Spot typisch für die Branche? |
| Überraschung | Ist der Spot überraschend? |
| Übertriebenheit | Ist der Spot überzogen? |
| Unterhaltungswert | Ist der Spot unterhaltsam? |
| Visuelle Auffälligkeit | Ist der Spot visuell auffällig gemacht? |
| Produktinteressewahrscheinlichkeit | Wie wahrscheinlich ist es, daß nach Betrachtung des Spots eine nähere Information über das Produkt / die Dienstleistung erfolgt? |
| Produktempfehlungswahrscheinlichkeit | Wie wahrscheinlich ist es, daß nach Betrachtung des Spots eine Empfehlung des Produkts / der Dienstleistung an Freunde oder Bekannte erfolgt? |
| Kauf-/Nutzungswahrscheinlichkeit | Wie wahrscheinlich ist es, daß nach Betrachtung des Spots ein Kauf / eine Nutzung des Produkt / der Dienstleistung in Betracht gezogen wird? |
| Marken-/Dienstleisterbekanntheit | Ist die Marke bzw. der Dienstleister im Spot zumindest der Bezeichnung nach bekannt? |
| Spotsymphatie | Hat der gesamte Spot im Allgemeinen gefallen? |
| Nutzerstatus | Wurde das beworbene Produkt schon einmal gekauft bzw. die Dienstleistung genutzt? Wenn ja, wie oft? |
| Markensymphatie vor Spotkonsum | Bestand vor dem Betrachten des Spots Sympathie gegenüber der im Spot beworbenen Marke? |
| Markensymphatie nach Spotkonsum | Bestand nach dem Betrachten des Spots Sympathie gegenüber der im Spot beworbenen Marke? |
| Verständlichkeit | Wird das im Spot beworbene Produkt dort verständlich erklärt? |
| Vertrautheit | Ist die jeweilig im Spot beworbene Marke, bzw. die jeweilig beworbene Dienstleistung vertraut? |
| Spot-Erinnerungsbild | Wird der Spot - nachdem er betrachtet wurde - erinnert? |

Die vorgenannte Aufgabe wird durch ein computerimplementiertes Verfahren zum Training eines computerimplementierten Prognose-Moduls zur automatischen Prognose von Wirkungen eines Medien-Objekts gelöst, bei dem das computerimplementierte Prognose-Modul
- einen Eingang für einen Signaturvektor, dessen Element oder Elemente die Signatur eines Medien-Objekts darstellt oder darstellen und der von einem computerimplementierten Extraktor automatisch für das Medien-Objekt ermittelt wird, wobei das jeweilige Vektor-Element des Signaturvektors jeweils ein Maß für eine von dem Extraktor gemessene, bestimmte, der jeweiligen Position des Vektor-Elements im Signaturvektor entsprechende Eigenschaft des Medien-Objekts darstellt, und
- einen Ausgang für einen Wirkungsvektor aufweist, der anhand des Signaturvektors vom Prognose-Modul ermittelt wird und dessen jeweiliges Vektor-Element jeweils ein Maß für eine, der Position des Vektor-Elements im Wirkungsvektor entsprechende Wirkung des Medien-Objekts darstellt,

wobei das Verfahren zum Training des Prognose-Moduls auf eine Datenbank von vorrätigen Medien-Objekten zugreift, denen jeweils ein hinsichtlich der Wirkung des jeweiligen Medien-Objekts als zutreffend bekannter Wirkungsvektor zugeordnet ist,
und jeweilig Medien-Objekte aus der Datenbank von vorrätigen Medien-Objekten dem automatischen Extraktor zur Analyse zugeführt werden, der hieraus jeweilig automatisch den zugehörigen Signaturvektor ermittelt und diesen dem Eingang des Prognose-Moduls für den Signaturvektor zusammen mit dem bekannten, dem Medienobjekt als zutreffend zugeordneten, Wirkungsvektor zum Training des Prognose-Moduls zuführt, wobei
das Prognose-Modul sich eines baumbasierten Vorhersagemodells zur Bestimmung des die jeweiligen Kenngrößen für die Wirksamkeit des jeweiligen Medien-Objekts enthaltenden Wirkungsvektors aus dem die Eigenschaften des jeweiligen Medien-Objekts enthaltenden Signaturvektor bedient,
und dieses baumbasierte Vorhersagemodell des Prognose-Moduls vermittels der, jeweilig einem in der Datenbank vorrätigen Medien-Objekt zugehörigen bekannten Wirkungsvektoren und der hierzu durch den computerimplementierten Extraktor jeweils ermittelten Signaturvektoren trainiert wird,
damit nach diesem Training das Prognose-Modul mittels des baumbasierten Vorhersagemodells anhand des jeweiligen Signaturvektors den jeweiligen Wirkungsvektor vermittels des baumbasierten Vorhersagemodells ermitteln kann.

Ferner wird die vorstehende Aufgabe durch ein computerimplementiertes Verfahren zur automatischen Prognose von Wirkungen eines Medien-Objekts mittels eines computerimplementierte Prognose-Moduls gelöst, bei dem das computerimplementierte Prognose-Modul
- einen Eingang für einen Signaturvektor, dessen Element oder Elemente die Signatur eines Medien-Objekts darstellt oder darstellen und der von einem computerimplementierten Extraktor automatisch für das Medien-Objekt ermittelt wird, wobei das jeweilige Vektor-Element des Signaturvektors jeweils ein Maß für eine von dem Extraktor gemessene, bestimmte, der jeweiligen Position des Vektor-Elements im Signaturvektor entsprechende Eigenschaft des Medien-Objekts darstellt, und
- einen Ausgang für einen Wirkungsvektor aufweist, der anhand des Signaturvektors vom Prognose-Modul ermittelt wird und dessen jeweiliges Vektor-Element jeweils ein Maß für eine, der Position des Vektor-Elements im Wirkungsvektor entsprechende Wirkung des Medien-Objekts darstellt, und

wobei das jeweilige hinsichtlich seiner Wirkungen zu prognostizierende Medien-Objekt dem automatischen Extraktor zur Analyse zugeführt wird, der hieraus automatisch den zugehörigen Signaturvektor ermittelt und diesen dem Eingang des Prognose-Moduls für den Signaturvektor zuführt, und
das Prognose-Modul anhand des Signaturvektors am Eingang den zugehörigen Wirkungsvektor ermittelt, wobei
das Prognose-Modul sich eines baumbasierten Vorhersagemodells zur Bestimmung des die jeweiligen Kenngrößen für die Wirksamkeit des jeweiligen Medien-Objekts enthaltenden Wirkungsvektors aus dem die Eigenschaften des jeweiligen Medien-Objekts enthaltenden Signaturvektors bedient und zuvor vermittels des computerimplementierten Verfahrens zum Training eines computerimplementierten Prognose-Moduls zur automatischen Prognose von Wirkungen eines Medien-Objekts nach der vorliegenden Erfindung anhand einer Datenbank von vorrätigen Medien-Objekten denen jeweils ein hinsichtlich der Wirkung des jeweiligen Medien-Objekts als zutreffend bekannter Wirkungsvektor zugeordnet ist, trainiert wurde.

Untersuchungen der Patentanmelderin mit einer Vielzahl von Probanden während des letzten Jahrzehnts (vgl. etwa Ansorge, Katrin in: Horizont, *SIGNATURE CODE S₀ will RTL mit Künstlicher Intelligenz die Werbewirkung steigern*, 24.09.2020, Deutscher Fachverlag GmbH HORIZONT, Mainzer Landstr. 251, 60326 Frankfurt) hatten dabei zunächst gezeigt, daß meßbare Eigenschaften eines Medien-Objekts existieren, die in einem Zusammenhang mit der erwarteten Werbewirkung und damit auch zu den vorerwähnten Kenngrößen für die Wirksamkeit eines Medien-Objekts (KPI's) stehen.

Bei diesen Eigenschaften handelt es sich etwa um visuelle, auditive und inhaltliche Eigenschaften des Medien-Objekts, aber auch um solche, die auf jeglichen anderen bewußt oder unbewußt wahrnehmbaren Aspekten des Medien-Objekts beruhen, wie etwa Dynamik, Information, Sachorientierung, Personenorientierung, Emotionalität, Visual Power, Branding und Storyline, wobei sich diese Eigenschaften wiederum aus Unter-Eigenschaften ergeben können, so etwa die sogenannte Visual Power aus Luminanz, Sättigung, dominantem Farbton, dominanten Farben, Kontrast eines Bild- oder Film-Medien-Objekts.

Dabei kommen vorzugsweise in Betracht:

| **Eigenschaft** | **Beschreibung** |
|---|---|
| Der sogenannte *Beat Count* (zu deutsch Schlagzahl) | |
| Lautstärke | |
| Dominante Farben | |
| Dominanter Farbton | |
| Luminanz / Sättigung | |
| Bewegung | Sogenannter *Optical Flow* (Optischer Fluß) -Ansatz: Wie viel Bewegung ist im Bild, basierend auf der Bewegung der Bild-Pixel zwischen zwei Bildern. |
| Sprache - Musik - Segmentierung | Unterteilung des Tons in gesprochene Sprache (männlich/weiblich), Musik, Geräusche, Stille (keine Energie) |
| Anzahl der geschriebenen Worte | |
| Schnitterkennung | |
| Garantien/Gewinnspiele | Werden Garantien oder Gewinnspiele beworben? |
| Gibt es einen Protagonisten? | |
| Gesicht vorhanden? | |
| Tier vorhanden? | |
| Logo vorhanden? | |
| Objekterkennung | |
| Emotion im Gesichtsausdruck | |
| Transkription | |
| Sprachliche Emotionen | Sind die Emotionen *wütend* / *traurig* / *neutral* / *glücklich* im gesprochenen Wort erkennbar? |
| Globaler Kontrast | |
| Spotlänge | |
| Anzahl gesprochener Worte | |

Zur automatischen Messung dieser Eigenschaften sind inzwischen (Video)-Extraktions-Verfahren bekannt, die etwa mittels entsprechender Software implementiert, von einer Vielzahl hierzu bekannter Techniken Gebrauch machen kann, wobei hier Methoden des Maschinellen Lernens explizit eingeschlossen sind, so daß bei Verwendung dieser Verfahren die Messung der vorerwähnten Medien-Objekt-Eigenschaften keiner manuellen Erfassung mehr bedarf und damit praktikabel und wirtschaftlich wird (vgl. etwa Xi Li et al., Video mining: Measuring Visual Information using automatic methods, International Journal of Research in Marketing 36 (2019) 216-231).

Auf der Basis dieser Erkenntnisse aus dem Stand der Technik können derartige (Video)-ExtraktionsVerfahren selbst realisiert (etwa programmiert und implementiert) werden.

Es werden hierzu aber auch bereits fertige kommerzielle Produkte am Markt angeboten, so etwa von Google^{™} mit deren Produkten *AudioML Video Intelligence* und *Video Intelligence API* (vgl. hierzu etwa *https:*//*cloud.google.com*/*video-intelligence*, zuletzt abgerufen am 05.03.2022), die beispielsweise das automatische Versehen von Videos mit Labeln, die automatische Erkennung von Szenenwechseln, automatische Objekterkennung und automatische Objektverfolgung, Texterkennung und Textextraktion (mit OCR), Erkennung anstößiger Inhalte, automatisches Versehen mit Untertiteln, automatische Logoerkennung, automatische Erkennung von Prominenten, automatische Gesichtserkennung sowie automatische Personenerkennung ermöglicht.

Ebenso existieren hierzu aber auch frei verfügbare Extraktoren, so etwa beispielhaft ein Modul zur Erkennung des Gesichtsausdrucks (vgl. etwa Baltrušaitis et al., *OpenFace: an open source facial behavior analysis toolkit*, Proceedings of 2016 IEEE Winter Conference on Applications of Computer Vision (WACV), 7. - 10. März 2016, Lake Placid, NY, USA) derer sich bedient werden kann.

Gleichwohl ist es technisch mit der automatischen Erfassung dieser Eigenschaften eines Medien-Objekts nicht getan, um auch die gesuchten vorerwähnten Kenngrößen für die Wirksamkeit eines Medien-Objekts (KPI's) für das jeweilige Medien-Objekt zu ermitteln.

Zwar stehen die vorgenannten Eigenschaften des Medien-Objekts nach den ebenfalls erwähnten Untersuchungen der Patentinhaberin (vgl. etwa Ansorge, Katrin in: Horizont, a.a.O., 24.09.2020) zweifellos in einem Zusammenhang mit der erwarteten Werbewirkung und damit auch zu den Kenngrößen (KPI's) für die Wirksamkeit eines Medien-Objekts, allerdings ist leider kein analytischer Zusammenhang - etwa in Gestalt einer geschlossenen angebbaren mathematischen Funktion - zwischen den meßbaren Eigenschaften eines Medien-Objekts (auch Signaturvektor genannt) und den Kenngrößen (KPI's) für die Wirksamkeit desselben Medien-Objekts (auch Wirkungsvektor genannt) bekannt, so daß hier auf andere Methoden der Ermittlung zurückgegriffen werden mußte.

Dabei wird ein computerimplementiertes Prognose-Modul, das als computerimplementierte künstliche Intelligenz mittels eines sogenannten *Tree Based Predictive Models* (Baumbasierte Vorhersagemodell) ausgestaltet ist, zur Bestimmung des die jeweiligen Kenngrößen für die Wirksamkeit enthaltenden Wirkungsvektors verwendet. Dies ermöglicht es, das Prognose-Modul einem Training anhand vorhandener Daten zu unterziehen, um so den analytisch unbekannten Zusammenhang zwischen dem Signaturvektor mit den Eigenschaften des jeweiligen Medien-Objekts zu dem Wirkungsvektors, der die zugehörigen Kenngrößen für die Wirksamkeit des jeweiligen Medien-Objekts enthält, herzustellen um dann, nach dem so erfolgten Training des Prognose-Moduls jedweden Signaturvektor auf einen zugehörigen Wirkungsvektor abbilden zu können, womit die Wirkung des zugehörigen Medien-Objekts durch das so trainierte Prognose-Modul ermittelt, jedenfalls aber prognostiziert werden kann.

Wie vorstehend erwähnt, nutzt das erfindungsgemäße Prognose-Modul zur Bestimmung des Wirkungsvektors eine computerimplementierte künstliche Intelligenz in Gestalt eines sogenannten *Trees Based Predictive Models* (baumbasiertes Vorhersagemodell), welches die Implementierung hierauf basierender baumbasierter Vorhersageverfahren und damit allgemein zugänglicher und etablierter Methoden des maschinellen Lernens wie das sogenannte *Gradient Boosting* oder die Methode der sogenannten *Random Forests*, die auf der Kombination einer großen Zahl von Entscheidungsbäumen basieren, ermöglicht (vgl. etwa Kern et al., Tree-based Machine Learning Methods for Survey Research. Survey Research Methods, 13(1), 2019, 73-93; oder auch Sahin et al., *Assessing the predictive capability of ensemble tree methods for landslide susceptibility mapping using XGBoost, gradient boosting machine, and random forest. SN Appl. Sci.* 2, 2020, 1308). Vorzugsweise können dabei sowohl Verfahren zum Einsatz kommen, bei denen die Ausgestaltung der Entscheidungsbäume einer Zufallskomponente unterliegt als auch solche, bei denen die Entscheidungsbäume gezielt auf eine möglichst geringe Abweichung zum bekannten, korrekten Ergebnis hin gestaltet werden. Bei letzteren Verfahren fungiert die Abweichung der Vorhersage eines jeden Entscheidungsbaums als Eingangsgröße für den nachgelagerten Entscheidungsbaum.

Beide Ansätze können genutzt werden, um eine Vielzahl von verschiedenen Datentypen zu verarbeiten. Darüber hinaus zeichnen sie sich durch vergleichsweise geringe Anforderungen an Rechenleistung und - damit verbunden - schnelles Modelltraining aus. Ein weiterer Vorteil dieser Methoden besteht im hohen Grad an Nachvollziehbarkeit und Erklärbarkeit der Klassifikation oder Regression.

Beide vorerwähnte Verfahren gehören zur Klasse des beaufsichtigten Lernens ( sogenanntes *supervised learning*), können aber auch als Teil eines teilbeaufsichtigten Ansatzes (sogenanntes *semi-supervised learning*) genutzt werden.

Vorzugsweise ist das computerimplementierte Verfahren zum Training eines computerimplementierten Prognose-Moduls zur automatischen Prognose von Wirkungen eines Medien-Objekts, erfindungsgemäß dadurch gekennzeichnet, daß das computerimplementierte Prognose-Modul nach einer Trainingsphase nach dem Verfahren nach der vorliegenden Erfindung ein Abweichungsmaß zwischen den vom Prognose-Modul für das Medien-Objekt aus der Datenbank von vorrätigen Medien-Objekten ermittelten Wirkungsvektoren und den für das jeweilige Medien-Objekt als zutreffend bekannten Wirkungsvektoren bestimmt und für den Fall, daß das Abweichungsmaß eine Schwelle überschreitet, das Training nach dem Verfahren nach der vorliegenden Erfindung solange fortgesetzt wird, bis das Abweichungsmaß die Schwelle nicht mehr überschreitet.

Auf diese Weise kann das Prognose-Modul mit seinem baumbasierten Vorhersagemodell zur Bestimmung des die jeweiligen Kenngrößen für die Wirksamkeit des jeweiligen Medien-Objekts enthaltenden Wirkungsvektors aus dem Signaturvektor des Medien-Objekts hinsichtlich seiner Genauigkeit optimiert werden, indem das Training erforderlichenfalls solange fortgesetzt wird, bis ein bestimmtes Maß an Genauigkeit anhand eines Vergleichs mit den bekannten Wirkungsvektoren erreicht ist.

Besonders bevorzugterweise wird erfindungsgemäß das Abweichungsmaß zwischen den vom Prognose-Modul für das Medien-Objekt aus der Datenbank von vorrätigen Medien-Objekten ermitteltem Wirkungsvektoren und den für das jeweilige Medien-Objekt als zutreffend bekannten Wirkungsvektoren anhand von solchen Medien-Objekten aus der Datenbank von vorrätigen Medien-Objekten und den diesen zugeordneten - etwa aus Umfragen - bekannten Wirkungsvektoren bestimmt, die (zuvor) nicht zum Training des Prognose-Moduls verwendet wurden. Auf diese Weise kann vermieden werden, daß die Wirkungsvektoren - etwa durch sehr langes Training - für die Fälle der Trainingsdaten sehr gut, also in Übereinstimmung oder in nahezu Übereinstimmung mit den tatsächlich - etwa aus Umfragen - bekannten Wirkungsvektoren der zugehörigen Medien-Objekte, bestimmt werden, eine solche Übereinstimmung aber im Falle der Verwendung von Daten, die nicht in das Training eingeflossen sind, nicht mehr erreicht wird.

Als Verfahren, welches auf dem baumbasierten Vorhersagemodell basiert können vorzugsweise das Verfahren des sogenannten *Gradient Boosting* oder das Verfahren der sogenannten *Random Forests* eingesetzt werden.

Wie bereits erwähnt, handelt es sich hier um gut erforschte, - insbesondere dem Fachmann - allgemein zugängliche und etablierte Methoden des maschinellen Lernens die die Implementierung von auf baumbasierenden Vorhersagemodellen fußenden entsprechenden baumbasierten Vorhersageverfahren ermöglichen.

Wie bereits gesagt, kommen im Rahmen der vorliegenden Erfindung als Anwendungsfall Medien-Objekte insbesondere Werbespots auf linear ausstrahlenden TV-Kanälen, aber auch andere Objekte oder eine Vielzahl weiterer Medien, insbesondere Werbemittel in Betracht, die von Werbetreibenden auf verschiedenen Wegen oder Medienkanälen plaziert werden können, um die Aufmerksamkeit der Konsumenten gezielt zu lenken.

Über die Bestimmung bzw. Prognose der zu erwartenden Werbewirkung hinaus, ist es auch Teil der vorliegenden Erfindung, Hinweise zu Steigerung dieser Werbewirkung zu gegeben. Diese Hinweise können insbesondere auf die jeweiligen der Eigenschaften des Medien-Objekts abzielen, sind aber nicht auf diese begrenzt.

Weiterhin beinhaltet das hier beschriebene Verfahren die Möglichkeit, nicht nur schon vollständig ausgestaltete Medien-Objekte zu verarbeiten, sondern auch den Erstellungsprozeß derselben zu unterstützen.

Vorzugsweise umfaßt die vorliegende Erfindung auch die graphische Darstellung der aus dem Medien-Objekt automatisch extrahierten, also automatisch gemessenen Eigenschaften (also etwa den ermittelten Signaturvektor) als sogenannte "*Werbemittel-DNA*". Für eine solche graphische Darstellung werden die automatisch gemessenen Eigenschaften des Medien-Objekts aufbereitet, was insbesondere die Kombination einzelner solcher Eigenschaften zu inhaltsbezogenen oder technisch motivierten Kategorien beinhalten kann. Weiterhin kann diese sogenannte *Werbemittel-DNA* auch mit weiteren Informationen zu anderen Medien-Objekten und deren Wirkung angereichert werden.

Dadurch kann das Medien-Objekt bevorzugterweise im Bezug zu anderen Medien-Objekten eingeordnet werden. Dazu können möglicherweise auch andere Medien-Objekte auf verschiedene Arten zusammengefasst werden (z. B. nach Branchenzugehörigkeit der etwaigen Werbetreibenden, aber auch eine Vielzahl von anderen Kriterien ist denkbar und hier mit eingeschlossen).

Bislang beruhte die Abschätzung der Wirkung eines Medien-Objekts auf Erfahrungswerten der Produzenten und konnte - wie bereits oben erwähnt - nur retrospektiv mithilfe von aufwendigen Befragungen und sonstigen Erhebungen, die z. B. versuchen den Absatz eines Produkts mit einer Werbemaßnahme zu korrelieren, quantitativ abgeschätzt werden. Daher erfolgte die Produktion eines Medien-Objekts - nicht zuletzt wegen des hohen Aufwandes für tatsächliche Befragungen (s.o.) - entsprechend meist wenig quantitativ fundiert. Die vorliegende Erfindung ermöglicht nun aber die prädiktive Bestimmung bzw. die Prognose Wirkung eines Medien-Objekts, insbesondere der Werbewirkung eines Werbespots und damit einen effizienteren Einsatz der zu Verfügung stehenden Mittel und darüber hinaus auch eine zielgerichtetere Ausgestaltung von Medien-Objekten, wie etwa von Werbespots.

Nachfolgend werden in der Zeichnung einige nicht einschränkend zu verstehende Ausführungsformen der vorliegenden Erfindung dargestellt. In dieser zeigen:
- Fig. **1**: eine schematische Übersichtsdarstellung der vorliegenden Erfindung als Blockdiagramm,
- Fig. **2**: eine schematische Darstellung der automatischen Extraktion von Eigenschaften aus einem Medien-Objekt zur Ermittlung dessen Signatur-Vektors, ebenfalls als Blockdiagramm, und
- Fig. **3**: eine schematische Darstellung des Trainingsprozesses für das Prognose-Modul nach der vorliegenden Erfindung, wiederum als Blockdiagramm.

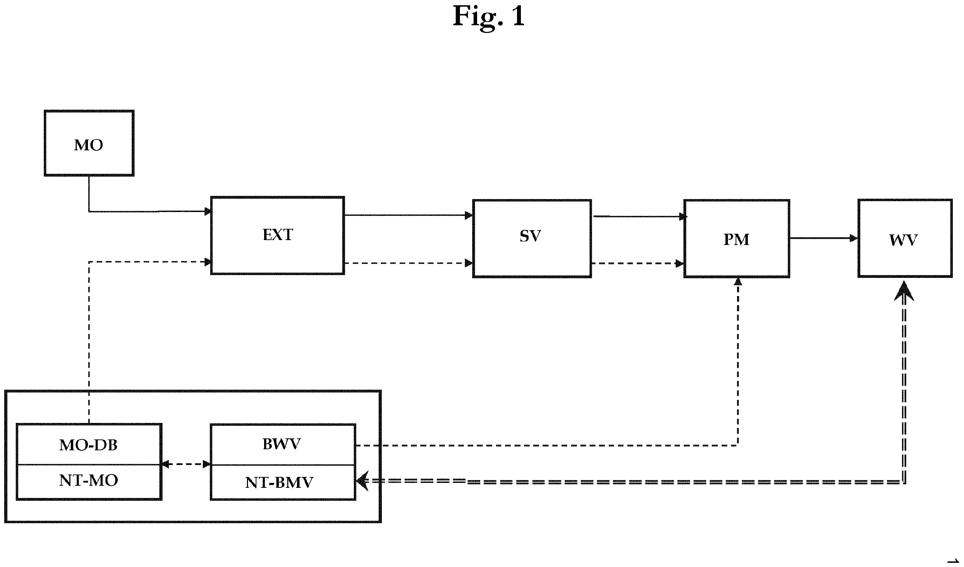

Fig. **1** zeigt eine schematische Übersichtsdarstellung der vorliegenden Erfindung als Blockdiagramm.

In der hier zu sehenden Übersicht sind Datenflüsse und Datenzuordnungen, die dem Training und nicht dem Betrieb dienen als einfache gestrichelte Linie (mit einem Pfeil in Datenflußrichtung bei Datenflüssen - - -> und mit zwei Pfeilen bei Datenzuordnungen <- - - >) dargestellt. Ein Datenvergleich (etwa im Training) wird durch eine gestrichelte Doppellinie (mit zwei Pfeilen zwischen den Vergleichsdaten <= = =>) veranschaulicht. Datenflüsse, die im Betrieb erfolgen werden als durchgehenden Linie (mit einem Pfeil in Datenflußrichtung ―>) dargestellt.

Das erfindungsgemäße computerimplementierte Prognose-Modul **PM** weist einen Eingang für einen Signaturvektor **SV** auf, dessen Element oder Elemente die Signatur eines Medien-Objekts darstellt oder darstellen und der von einem computerimplementierten Extraktor **EXT** automatisch für das Medien-Objekt **MO** ermittelt wird, wobei das jeweilige Vektor-Element des Signaturvektors **SV** jeweils ein Maß für eine von dem Extraktor **EXT** gemessene, bestimmte, der jeweiligen Position des Vektor-Elements im Signaturvektor entsprechende Eigenschaft des Medien-Objekts **MO** darstellt.

Auch weist das Prognose-Modul **PM** einen Ausgang für einen Wirkungsvektor **WV** auf, der anhand des Signaturvektors **SV** vom Prognose-Modul **PM** ermittelt wird und dessen jeweiliges Vektor-Element jeweils ein Maß für eine, der Position des Vektor-Elements im Wirkungsvektor **WV** entsprechende Wirkung des Medien-Objekts **MO** darstellt.

Das Verfahren zum Training des Prognose-Moduls **PM** greift auf eine Datenbank von vorrätigen Medien-Objekten **MO-DB** zu, denen jeweils ein hinsichtlich der Wirkung des jeweiligen Medien-Objekts als zutreffend bekannter Wirkungsvektor **BWV** zugeordnet ist.

Im Training werden jeweils Medien-Objekte aus der Datenbank von vorrätigen Medien-Objekten **MO-DB** dem automatischen Extraktor **EXT** zur Analyse zugeführt **MO-DB** - - -> **EXT**, der hieraus automatisch den zugehörigen Signaturvektor **SV** ermittelt **EXT** - - -> **SV**und diesen dem Eingang des Prognose-Moduls **PM** für den Signaturvektor **SV** zuführt **SV** - - -> **PM.** Zusammen hiermit wird dem Prognose-Moduls **PM** zum Training der dem jeweiligen Medienobjekt aus der Datenbank von vorrätigen Medien-Objekten **MO-DB** zugeordnete Wirkungsvektor **BWV**, der für das jeweils vorrätige Medien-Objekt als zutreffend - etwa aus manuell erhobenen Umfragen - bekannt ist, ebenfalls zugeführt **BWV** - - -> **PM.**

Das Prognose-Modul **PM** bedient sich eines baumbasierten Vorhersagemodells (*Tree Based Predictive Model*), das etwa fußend hierauf als Vorhersageverfahren vorzugsweise im Wege eines sogenannten *Gradient Boostings* oder auch als sogenannte *Random Forests*-Methode implementiert sein kann. Diese Verfahren basieren auf der Kombination einer großen Zahl von Entscheidungsbäumen und ermitteln auf dieser Grundlage aus den Eingangsgrößen - hier den Elementen (also den Eigenschaften des Medienobjekts) des jeweiligen Signaturvektors **SV** - die etwa in die Knoten der Entscheidungsbäume eingehen, ein Ergebnis - hier die Elementen des Wirkungsvektors **WV** - etwa an den Blättern der Entscheidungsbäume (vgl. etwa Kern et al., Tree-based Machine Learning Methods for Survey Research. Survey Research Methods, 13(1), 2019, 73-93; oder auch Sahin et al., *Assessing the predictive capability of ensemble tree methods for landslide susceptibility mapping using XGBoost, gradient boosting machine, and random forest. SN Appl Sci.* 2, 2020, 1308). Bei diesen Verfahren handelt es sich um gut erforschte und insbesondere dem Fachmann wohlbekannte und ihm allgemein zugängliche und etablierte Methoden des maschinellen Lernens, die die Implementierung von auf baumbasierenden Vorhersagemodellen fußenden entsprechenden baumbasierten Vorhersageverfahren - wie vorzugsweise das sogenannte *gradient boosting* oder die Methode der sogenannten *random forests* - ermöglichen. Hierzu stehen Standard-(Software-)-Module zur Verfügung, die unabhängig von ihrer genauen internen Implementierung als Baukastenelement eingesetzt werden können.

So kann hierfür etwa *scikit-learn* (abrufbar im *World Wide Web* des Internet unter der URL: "*https:*//*scikit-learn.org*/*stable*/") oder auch catboost (abrufbar im *World Wide Web* des Internet unter der URL: "/ *https:*//*catboost.ai*/") eingesetzt werden, welche jeweils frei verfügbar sind.

Mittels des baumbasierten Vorhersagemodells kann durch das Prognose-Modul **PM** dann eine Bestimmung des die jeweiligen Kenngrößen für die Wirksamkeit des jeweiligen Medien-Objekts enthaltenden Wirkungsvektors **WV** aus dem die Eigenschaften des jeweiligen Medien-Objekts enthaltenden Signaturvektors **SV** erfolgen, nachdem das baumbasierte Vorhersagemodell des Prognose-Moduls **PM** vermittels jeweiliger, in der Datenbank **MO-DB** vorrätiger Medien-Objekte nebst den jeweils zugehörigen bekannten Wirkungsvektoren **BWV** und den hierzu durch den computerimplementierten Extraktor **EXT** jeweils ermittelten Signaturvektoren **SV** trainiert wurde.

Dem Prognose-Modul **PM** werden also die jeweiligen einander zugehörigen Signaturvektoren **SV** und Wirkungsvektoren **WV** von Medien-Objekten aus der Datenbank vorrätiger Medien-Objekte **MO-DB** zu seinem Training zugeführt. Dabei sind die Wirkungsvektoren **WV** für diese Medien-Objekte aus der Datenbank vorrätiger Medien-Objekte **MO-DB** - etwa aus manuell durchgeführten Umfragen (siehe oben) - bekannt. In der Zuordnungsinformation dieser für vorrätige Medien-Objekte aus der Datenbank **MO-DB** bekannten Wirkungsvektoren **WV** zu den vom Extraktor **EXT** hierzu ermittelten Signaturvektoren **SV** liegt das so codierte Wissen des Zusammenhangs zwischen dem Signaturvektor **SV** und dem Wirkungsvektor WV eines Medien-Objekts **MO**, das zum Training des Prognose-Moduls **PM** eingesetzt wird, um es auch für solche Medien-Objekte **MO** nutzen zu können, für die keine Wirkungsvektoren **WV** (und damit Wirkungsdaten) bekannt sind.

Ermöglicht wird dieses Training und das hieraus resultierende Ergebnis durch die Verwendung eines baumbasierten Vorhersagemodells (*Tree Based Predictive Model*) im Prognode-Modul **PM**, wobei das baumbasierten Vorhersagemodell (etwa mittels eines Vorhersageverfahrens) - vorzugsweise im Wege eines sogenannten *Gradient Boostings* oder auch als sogenannte *Random Forests*-Methode - implementiert sein kann.

Im Betrieb - also nach dem Training - wird das Verfahren zur automatischen Prognose von Wirkungen eines Medien-Objekts dann so verwendet, daß das jeweilige hinsichtlich seiner Wirkungen zu prognostizierende Medien-Objekt **MO** dem automatischen Extraktor **EXT** zur Analyse zugeführt wird **MO** -> **EXT**, der hieraus automatisch den zugehörigen Signaturvektor **SV** ermittelt **EXT** -> **SV** und diesen dem Eingang des Prognose-Moduls **PM** für den Signaturvektor zuführt **SV** -> **PM**, und das Prognose-Modul **PM** anhand des Signaturvektors **SV** am Eingang den zugehörigen Wirkungsvektor **WV** ermittelt, **PM** -> **WV**, wobei - wie auch bereits oben erwähnt - das Prognose-Modul **PM** sich eines baumbasierten Vorhersagemodells zur Bestimmung des die jeweiligen Kenngrößen für die Wirksamkeit des jeweiligen Medien-Objekts enthaltenden Wirkungsvektors **WV** aus dem die Eigenschaften des jeweiligen Medien-Objekts enthaltenden Signaturvektors **SV** bedient und zuvor vermittels des erfindungsgemäßen computerimplementierten Verfahrens zum Training eines computerimplementierten Prognose-Moduls **PM** zur automatischen Prognose von Wirkungen eines Medien-Objekts anhand einer Datenbank von vorrätigen Medien-Objekten **MO-DB**, denen jeweils ein hinsichtlich der Wirkung des jeweiligen Medien-Objekts als zutreffend bekannter Wirkungsvektor **BMV** zugeordnet ist, trainiert wurde.

Vorzugsweise ist das erfindungsgemäße computerimplementierte Verfahren zum Training eines computerimplementierten Prognose-Moduls **PM** zur automatischen Prognose von Wirkungen eines Medien-Objekts **MO** so ausgestaltet, daß das computerimplementierte Prognose-Modul **PM** nach einer Trainingsphase nach dem erfindungsgemäßen Verfahren ein Abweichungsmaß zwischen den vom Prognose-Modul **PM** für das Medien-Objekt aus der Datenbank von vorrätigen Medien-Objekten **MO-DB** ermittelten Wirkungsvektoren **WV** und den für das jeweilige Medien-Objekt als zutreffend bekannten Wirkungsvektoren **BMV** bestimmt. Dieses Abweichungsmaß kann dabei etwa durch einen Vergleich **BMV** <= = => **WV** der vom Prognose-Modul **PM** für das Medien-Objekt aus der Datenbank von vorrätigen Medien-Objekten **MO-DB** ermittelten Wirkungsvektoren **WV** mit den für das jeweilige Medien-Objekt als zutreffend bekannten Wirkungsvektoren **BMV** erfolgen.

Zur Bestimmung eines Abweichungsmaßes kann vorzugsweise etwa die Methode der kleinsten Fehlerquadrate zum Einsatz kommen.

Für den Fall, daß das Abweichungsmaß eine gewisse - vorzugsweise vorher festgelegte - Schwelle überschreitet, wird das Training des Prognose-Moduls **PM** nach dem erfindungsgemäßen Verfahren solange fortgesetzt wird, bis das Abweichungsmaß die Schwelle nicht mehr überschreitet.

Auf diese Weise kann das Prognose-Modul **PM** mit seinem baumbasierten Vorhersagemodell zur Bestimmung des die jeweiligen Kenngrößen für die Wirksamkeit des jeweiligen Medien-Objekts **MO** enthaltenden Wirkungsvektor **WV** aus dem Signaturvektor **SV** des Medien-Objekts **MO** hinsichtlich seiner Genauigkeit optimiert werden, indem das Training erforderlichenfalls solange fortgesetzt wird, bis ein bestimmtes Maß an Genauigkeit anhand eines Vergleichs mit den bekannten Wirkungsvektoren **BMV** erreicht ist.

Besonders bevorzugterweise wird das Abweichungsmaß gemäß der vorliegenden Erfindung zwischen den vom Prognose-Modul **PM** für das Medien-Objekt aus der Datenbank von vorrätigen Medien-Objekten **DM-MO** ermitteltem Wirkungsvektoren **WV** und den für das jeweilige Medien-Objekt als zutreffend bekannten Wirkungsvektoren **BMV** anhand von solchen Medien-Objekten **NT-MO** aus der Datenbank von vorrätigen Medien-Objekten **DB-MO** und den diesen zugeordneten - etwa aus Umfragen - bekannten Wirkungsvektoren **NT-BMV** bestimmt, die (zuvor) nicht zum Training des Prognose-Moduls **PM** verwendet wurden. Auf diese Weise kann vermieden werden, daß die ermittelten Wirkungsvektoren **WV** - etwa durch sehr langes Training - für die Fälle der Trainingsdaten sehr gut, also in Übereinstimmung oder in nahezu Übereinstimmung mit den tatsächlich bekannten Wirkungsvektoren **BMV** der zugehörigen Medien-Objekte aus der Datenbank von vorrätigen Medien-Objekten **DB-MO**, bestimmt werden, eine solche Übereinstimmung aber im Falle der Verwendung von Daten, die nicht in das Training eingeflossen sind, nicht mehr erreicht wird.

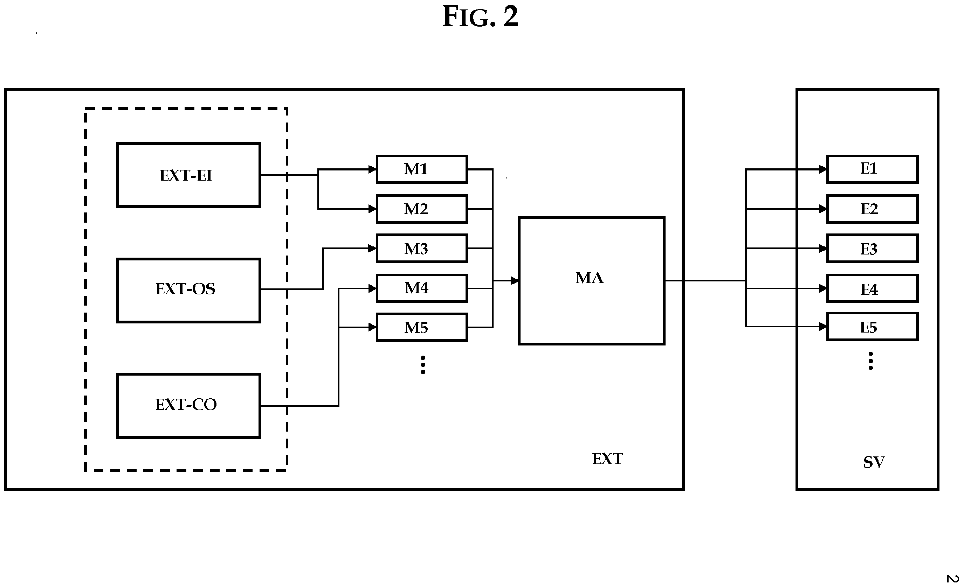

In Fig. 2 ist die automatische Extraktion von - selbstverständlich (auch hinsichtlich ihrer Anzahl) nur beispielhaft angeführten - Eigenschaften **E1**, **E2**, **E3**, **E4**, **E5** aus einem Medien-Objekt zur Ermittlung dessen Signatur-Vektors **SV**, ebenfalls als Blockdiagramm dargestellt.

Bei diesen Eigenschaften **E1**, **E2, E3**, **E4**, **E5** handelt es sich etwa um visuelle, auditive und inhaltliche Eigenschaften **E1**, **E2**, **E3**, **E4**, **E5** des Medien-Objekts, aber auch um solche, die auf jeglichen anderen bewußt oder unbewußt wahrnehmbaren Aspekten des Medien-Objekts beruhen, wie etwa Dynamik, Information, Sachorientierung, Personenorientierung, Emotionalität, Visual Power, Branding und Storyline, wobei sich diese Eigenschaften wiederum aus Unter-Eigenschaften ergeben können, so etwa die sogenannte Visual Power aus Luminanz, Sättigung, dominantem Farbton, dominanten Farben, Kontrast eines Bild- oder Film-Medien-Objekts.

Zur automatischen Messung dieser Eigenschaften sind inzwischen (Video)-Extraktions-Verfahren bekannt, die etwa mittels entsprechender Software implementiert, von einer Vielzahl hierzu bekannter Techniken Gebrauch machen kann, wobei hier Methoden des Maschinellen Lernens explizit eingeschlossen sind, so daß bei Verwendung dieser Verfahren die Messung der vorerwähnten Medien-Objekt-Eigenschaften keiner manuellen Erfassung mehr bedarf und damit praktikabel und wirtschaftlich wird (vgl. etwa Xi Li et al., Video mining: Measuring visual Information using automatic methods, International Journal of Research in Marketing 36 (2019) 216-231).

Der vorstehenden dargestellte Stand der Technik ermöglicht so die Implementierung eines automatischen Extraktors **EXT** zur automatischen Feststellung von Eigenschaften **E1**, **E2**, **E3**, **E4**, **E5** des Medien-Objekts, um so dessen Signatur-Vektor **SV** mit den Eigenschaften **E1**, **E2**, **E3**, **E4**, **E5** als Vektor-Elementen zu bestimmen.

Auf der Basis der vorstehend dargestellten Erkenntnisse aus dem Stand der Technik können derartige (Video)-Extraktions-Verfahren **EXT-EI** selbst realisiert (etwa programmiert und implementiert) werden.

Es werden hierzu aber auch bereits fertige kommerzielle Produkte **EXT-CO** am Markt angeboten, so etwa von Google^{™} mit deren Produkten *AudioML Video Intelligence* und *Video Intelligence API* (vgl. hierzu etwa *https:*//*cloud.google.com*/*video-intelligence*, zuletzt abgerufen am 05.03.2022), die beispielsweise das automatische Versehen von Videos mit Labeln, die automatische Erkennung von Szenenwechseln, automatische Objekterkennung und automatische Objektverfolgung, Texterkennung und Textextraktion (mit OCR), Erkennung anstößiger Inhalte, automatisches Versehen mit Untertiteln, automatische Logoerkennung, automatische Erkennung von Prominenten, automatische Gesichtserkennung sowie automatische Personenerkennung ermöglicht.

Ebenso existieren hierzu aber auch frei verfügbare Extraktoren **EXT-OS*,*** so etwa beispielhaft ein Modul zur Erkennung des Gesichtsausdrucks (vgl. etwa Baltrušaitis et al., OpenFace: an open source facial behavior analysis toolkit, Proceedings of 2016 IEEE Winter Conference on Applications of Computer Vision (WACV), 7. - 10. März 2016, Lake Placid, NY, USA) derer sich bedient werden kann.

Alle diese automatischen Extraktionsmethoden **EXT-EI**, **EXT-CO** und/oder **EXT-OS** ermitteln so automatisch bestimmte Merkmale **M1**, **M2**, **M3**, **M4**, **M5** des Medien-Objekts, die auch beliebig nach Art eines Baukastens miteinander kombiniert werden können.

Vor der Bildung des Signaturvektors **SV** mit Elementen **E1**, **E2**, **E3**, **E4**, **E5** aus den automatisch ermittelten Merkmalen **M1**, **M2**, **M3**, **M4**, **M5** werden die Merkmale **M1**, **M2**, **M3**, **M4**, **M5** - etwa durch Verrechnung (so auch untereinander), Zusammenfassung, Skalierung oder dergleichen - vorzugsweise in einer Merkmalsaufbereitung **MA** aufbereitet, um so als Ergebnis des automatischen Extraktors **EXT** schließlich zu dem vom Extraktor **EXT** analysierten Medien-Objekt zugehörigen Signaturvektor **SV** mit seinen Elementen **E1**, **E2**, **E3**, **E4**, **E5** zu erhalten.

Es versteht sich, daß weder die ermittelten Merkmale **M1**, **M2**, **M3**, **M4**, **M5** noch die hieraus bestimmtem Elemente **E1**, **E2**, **E3**, **E4**, **E5** auf die hier verwendete Anzahl von fünf beschränkt sind. Vielmehr kommt hier jedwede Anzahl in Betracht. Auch kann die Anzahl der Merkmale **M1**, **M2**, **M3**, **M4**, **M5** selbstverständlich von der Anzahl der Elemente **E1**, **E2**, **E3**, **E4**, **E5** abweichen.

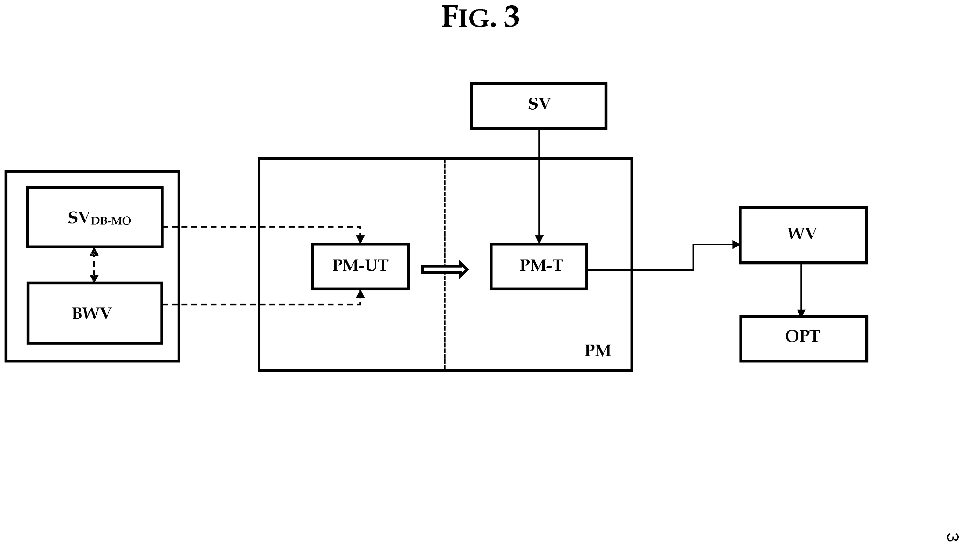

Fig. 3 zeigt eine schematische Darstellung des Trainingsprozesses für das Prognose-Modul **PM** nach der vorliegenden Erfindung, wiederum als Blockdiagramm.

Auch in der hier zu sehenden Übersicht sind Datenflüsse und Datenzuordnungen, die dem Training und nicht dem Betrieb dienen als einfache gestrichelte Linie (mit einem Pfeil in Datenflußrichtung bei Datenflüssen - - -> und mit zwei Pfeilen bei Datenzuordnungen <- - - >) dargestellt. Datenflüsse, die im Betrieb erfolgen werden als durchgehenden Linie (mit einem Pfeil in Datenflußrichtung ―>) dargestellt.

Zum Training des Prognose-Moduls **PM** werden die - vom automatischen Extraktor aus den Medien-Objekten der Datenbank vorrätiger Medien-Objekte ermittelten - Signaturvektoren **SV_{DB-MO}** nebst den hierzu gehörigen - etwa aus Umfragen - bekannten Wirkungsvektoren **BWV** verwendet, was auf der linken Seite der Darstellung schematisch zu sehen ist.

Ermöglicht wird dieses Training des zunächst noch untrainierten Prognose-Moduls **PM-UT** und das hieraus resultierende Ergebnis eines trainierten Prognose-Moduls **PM-T** durch die Verwendung eines baumbasierten Vorhersagemodells (*Tree Based Predictive Model*) im Prognose-Modul **PM**, wobei das baumbasierte Vorhersagemodell (etwa mittels eines Vorhersageverfahrens) - vorzugsweise im Wege eines sogenannten *Gradient Boostings* oder auch als sogenannte *Random Forests*-Methode - implementiert sein kann. Wegen der Details sei hier auf die diesbezüglichen Erläuterungen zu Fig. **1** verwiesen.

Nach abgeschlossenem Training kann das Prognose-Modul **PM** dann mittels des baumbasierten Vorhersagemodells anhand des jeweiligen -vom automatischen Extraktor aus dem Medien-Objekten bestimmten - Signaturvektors **SV** den jeweiligen Wirkungsvektor **WV** vermittels des baumbasierten Vorhersagemodells ermitteln, was auf der rechten Seite der Darstellung schematisch zu sehen ist.

Auch können so aus dem jeweilig für ein Medien-Objekt so ermittelten Wirkungsvektor **WV** Rückschlüsse für eine Optimierung **OPT** des Medien-Objekts gezogen werden, dies nicht zuletzt auch im Hinblick auf die Verwendung der nun so möglichen prädiktiven Bestimmung bzw. Prognose der Wirkung eines Medien-Objekts, insbesondere der Werbewirkung eines Werbespots zur zielgerichteteren Ausgestaltung von Medien-Objekten, wie etwa von Werbespots.

## Patentansprüche

1. Computerimplementiertes Verfahren zum Training eines computerimplementierten Prognose-Moduls (**PM**) zur automatischen Prognose von Wirkungen eines Medien-Objekts (**MO**), **dadurch gekennzeichnet, daß** das computerimplementierte Prognose-Modul (**PM**)
einen Eingang für einen Signaturvektor (**SV**) aufweist, dessen Element oder Elemente (**E1**, **E2**, **E3**, **E4**, **E5**) die Signatur eines Medien-Objekts (**MO**) darstellt oder darstellen und der von einem computerimplementierten Extraktor (**EXT**) automatisch für das Medien-Objekt (**MO**) ermittelt wird, wobei das jeweilige Vektor-Element (**E1**, **E2**, **E3**, **E4**, **E5**) des Signaturvektors (**SV**) jeweils ein Maß für eine von dem Extraktor (**EXT**) gemessene, bestimmte, der jeweiligen Position des Vektor-Elements (**E1**, **E2**, **E3**, **E4**, **E5**) im Signaturvektor (**SV**) entsprechende Eigenschaft des Medien-Objekts (**MO**) darstellt,
einen Ausgang für einen Wirkungsvektor (**WV**) aufweist, der anhand des Signaturvektors (**SV**) vom Prognose-Modul (**PM**) ermittelt wird und dessen jeweiliges Vektor-Element jeweils ein Maß für eine, der Position des Vektor-Elements im Wirkungsvektor entsprechende Wirkung des Medien-Objekts (**MO**) darstellt, und
wobei das Verfahren zum Training des Prognose-Moduls (**PM**) auf eine Datenbank von vorrätigen Medien-Objekten (**DB-MO**) zugreift, denen jeweils ein hinsichtlich der Wirkung des jeweiligen Medien-Objekts als zutreffend bekannter Wirkungsvektor (**BWV**) zugeordnet ist,
und jeweilig Medien-Objekte aus der Datenbank von vorrätigen Medien-Objekten (**DB-MO**) dem automatischen Extraktor (**EXT**) zur Analyse zugeführt werden, der hieraus jeweilig automatisch den zugehörigen Signaturvektor (**SV**) ermittelt und diesen dem Eingang des Prognose-Moduls (**PM**) für den Signaturvektor zusammen mit dem bekannten, dem Medienobjekt als zutreffend zugeordneten, Wirkungsvektor (**BMV**) zum Training des Prognose-Moduls (**PM**) zuführt, wobei
das Prognose-Modul (**PM**) sich eines baumbasierten Vorhersagemodells zur Bestimmung des die jeweiligen Kenngrößen für die Wirksamkeit des jeweiligen Medien-Objekts enthaltenden Wirkungsvektors (**WV**) aus dem die Eigenschaften des jeweiligen Medien-Objekts enthaltenden Signaturvektor (**SV**) bedient,
und dieses baumbasierte Vorhersagemodell des Prognose-Moduls (**PM**) vermittels der, jeweilig einem in der Datenbank (**DB-MO**) vorrätigen Medien-Objekt zugehörigen bekannten Wirkungsvektoren (**BMV**) und der hierzu durch den computerimplementierten Extraktor (**EXT**) jeweils ermittelten Signaturvektoren trainiert wird,
damit nach diesem Training das Prognose-Modul (**PM**) mittels des baumbasierten Vorhersagemodells anhand des jeweiligen Signaturvektors (**SV**) den jeweiligen Wirkungsvektor (**WV**) vermittels des baumbasierten Vorhersagemodells ermitteln kann.

2. Computerimplementiertes Verfahren zum Training eines computerimplementierten Prognose-Moduls (**PM**) zur automatischen Prognose von Wirkungen eines Medien-Objekts (**MO**), **dadurch gekennzeichnet, daß** das computerimplementierte Prognose-Modul (**PM**) nach einer Trainingsphase nach dem Verfahren nach Anspruch 1 ein Abweichungsmaß zwischen den vom Prognose-Modul (**PM**) für das Medien-Objekt aus der Datenbank von vorrätigen Medien-Objekten (**DB-MO**) ermittelten Wirkungsvektoren (**WV**) und den für das jeweilige Medien-Objekt als zutreffend bekannten Wirkungsvektoren (**BWV**) bestimmt und für den Fall, daß das Abweichungsmaß eine Schwelle überschreitet, das Training nach dem Verfahren nach Anspruch 1 solange fortgesetzt wird, bis das Abweichungsmaß die Schwelle nicht mehr überschreitet.

3. Computerimplementiertes Verfahren zum Training eines computerimplementierten Prognose-Moduls (**PM**) zur automatischen Prognose von Wirkungen eines Medien-Objekts (**MO**) nach Anspruch 2, **dadurch gekennzeichnet, daß** das Abweichungsmaß zwischen den vom Prognose-Modul (**PM**) für das Medien-Objekt aus der Datenbank von vorrätigen Medien-Objekten (**DB-MO**) ermitteltem Wirkungsvektoren (**WV**) und den für das jeweilige Medien-Objekt als zutreffend bekannten Wirkungsvektoren (**BWV**) anhand von solchen Medien-Objekten (**NT-MO**) aus der Datenbank von vorrätigen Medien-Objekten (**DB-MO**) bestimmt wird, die nicht zum Training des Prognose-Moduls (**PM**) verwendet wurden.

4. Computerimplementiertes Verfahren zum Training eines computerimplementierten Prognose-Moduls **PM**) zur automatischen Prognose von Wirkungen eines Medien-Objekts (**MO**) nach Anspruch 1, 2 oder 3, **dadurch gekennzeichnet, daß** als, auf dem baumbasierten Vorhersagemodell basierendes baumbasiertes Vorhersageverfahren das Verfahren des sogenannten *Gradient Boosting* eingesetzt wird.

5. Computerimplementiertes Verfahren zum Training eines computerimplementierten Prognose-Moduls (**PM**) zur automatischen Prognose von Wirkungen eines Medien-Objekts (**MO**) nach Anspruch 1, 2, 3 oder 4, **dadurch gekennzeichnet, daß** als, auf dem baumbasierten Vorhersagemodell basierendes baumbasiertes Vorhersageverfahren das Verfahren der sogenannten *Random Forests* eingesetzt wird.

6. Computerimplementiertes Verfahren zur automatischen Prognose von Wirkungen eines Medien-Objekts (**MO**) mittels eines computerimplementierte Prognose-Moduls (**PM**), **dadurch gekennzeichnet, daß** das computerimplementierte Prognose-Modul (**PM**)
einen Eingang für einen Signaturvektor (**SV**) aufweist, dessen Element oder Elemente (**E1**, **E2**, **E3**, **E4**, **E5**) die Signatur eines Medien-Objekts (**MO**) darstellt oder darstellen und der von einem computerimplementierten Extraktor (**EXT**) automatisch für das Medien-Objekt (**MO**) ermittelt wird, wobei das jeweilige Vektor-Element (**E1**, **E2**, **E3**, **E4**, **E5**) des Signaturvektors (**SV**) jeweils ein Maß für eine von dem Extraktor (**EXT**) gemessene, bestimmte, der jeweiligen Position des Vektor-Elements (**E1**, **E2**, **E3**, **E4**, **E5**) im Signaturvektor (**SV**) entsprechende Eigenschaft des Medien-Objekts (**MO**) darstellt,
einen Ausgang für einen Wirkungsvektor (**WV**) aufweist, der anhand des Signaturvektors (**SV**) vom Prognose-Modul (**PM**) ermittelt wird und dessen jeweiliges Vektor-Element jeweils ein Maß für eine, der Position des Vektor-Elements im Wirkungsvektor (**WV**) entsprechende Wirkung des Medien-Objekts (**MO**) darstellt, und
wobei das jeweilige hinsichtlich seiner Wirkungen zu prognostizierende Medien-Objekt (**MO**) dem automatischen Extraktor (**EXT**) zur Analyse zugeführt wird, der hieraus automatisch den zugehörigen Signaturvektor (**SV**) ermittelt und diesen dem Eingang des Prognose-Moduls (**PM**) für den Signaturvektor (**SV**) zuführt, und
das Prognose-Modul (**PM**) anhand des Signaturvektors (**SV**) am Eingang den zugehörigen Wirkungsvektor (**WV**) ermittelt, wobei
das Prognose-Modul (**PM**) sich eines baumbasierten Vorhersagemodells zur Bestimmung des die jeweiligen Kenngrößen für die Wirksamkeit des jeweiligen Medien-Objekts (**MO**) enthaltenden Wirkungsvektors (**WV**) aus dem die Eigenschaften des jeweiligen Medien-Objekts (**MO**) enthaltenden Signaturvektors (**SV**) bedient und zuvor vermittels des computerimplementierten Verfahrens zum Training eines computerimplementierten Prognose-Moduls (**PM**) zur automatischen Prognose von Wirkungen eines Medien-Objekts (**MO**) nach Anspruch 1, 2 oder 3 anhand einer Datenbank von vorrätigen Medien-Objekten (**DB-MO**) denen jeweils ein hinsichtlich der Wirkung des jeweiligen Medien-Objekts als zutreffend bekannter Wirkungsvektor (**BMV**) zugeordnet ist, trainiert wurde.

7. Computerimplementiertes Verfahren zur automatischen Prognose von Wirkungen eines Medien-Objekts (**MO**) nach Anspruch 6, **dadurch gekennzeichnet, daß** als, auf dem baumbasierten Vorhersagemodell basierendes baumbasiertes Vorhersageverfahren das Verfahren des sogenannten *Gradient Boosting* eingesetzt wird.

8. Computerimplementiertes Verfahren zur automatischen Prognose von Wirkungen eines Medien-Objekts (**MO**) nach Anspruch 6, **dadurch gekennzeichnet, daß** als, auf dem baumbasierten Vorhersagemodell basierendes baumbasiertes Vorhersageverfahren das Verfahren der sogenannten *Random Forests* eingesetzt wird.

9. Computersystem mit zumindest einem Prozessor und einem Speicher, **dadurch gekennzeichnet, daß** es zur Ausführung von zumindest einem Verfahren nach einem der Ansprüche 1 bis 8 eingerichtet ist.

10. Computerprogramm, **dadurch gekennzeichnet, daß** es, wenn es auf einem Computersystem ausgeführt wird, zumindest ein Verfahren nach einem der Ansprüche 1 bis 8 ausführt.

## Geänderte Patentansprüche

### Geänderte Patentansprüche gemäss Regel 137(2) EPÜ.

1. Computerimplementiertes Verfahren zum Training eines computerimplementierten Prognose-Moduls **(PM)** zur automatischen Prognose von Wirkungen eines Medien-Objekts **(MO), dadurch gekennzeichnet, daß** das computerimplementierte Prognose-Modul **(PM)**
einen Eingang für einen Signaturvektor **(SV)** aufweist, dessen Element oder Elemente **(E1, E2, E3, E4, E5)** die Signatur eines Medien-Objekts **(MO)** darstellt oder darstellen und der von einem computerimplementierten Extraktor (**EXT**) automatisch für das Medien-Objekt (**MO**) ermittelt wird, wobei das jeweilige Vektor-Element (**E1, E2, E3, E4, E5**) des Signaturvektors (**SV**) jeweils ein Maß für eine von dem Extraktor (**EXT**) gemessene, bestimmte, der jeweiligen Position des Vektor-Elements (**E1, E2, E3, E4, E5**) im Signaturvektor (**SV**) entsprechende Eigenschaft des Medien-Objekts (**MO**) darstellt,
einen Ausgang für einen Wirkungsvektor (**WV**) aufweist, der anhand des Signaturvektors (**SV**) vom Prognose-Modul (**PM**) ermittelt wird und dessen jeweiliges Vektor-Element jeweils ein Maß für eine, der Position des Vektor-Elements im Wirkungsvektor entsprechende Wirkung des Medien-Objekts (**MO**) darstellt, und
wobei das Verfahren zum Training des Prognose-Moduls (**PM**) auf eine Datenbank von vorrätigen Medien-Objekten (**MO**-**DB**) zugreift, denen jeweils ein hinsichtlich der Wirkung des jeweiligen Medien-Objekts als zutreffend bekannter Wirkungsvektor (**BWV**) zugeordnet ist,
und jeweilig Medien-Objekte aus der Datenbank von vorrätigen Medien-Objekten (**MO**-**DB**) dem automatischen Extraktor (**EXT**) zur Analyse zugeführt werden, der hieraus jeweilig automatisch den zugehörigen Signaturvektor (**SV**) ermittelt und diesen dem Eingang des Prognose-Moduls (**PM**) für den Signaturvektor zusammen mit dem bekannten, dem Medienobjekt als zutreffend zugeordneten, Wirkungsvektor (**BWV**) zum Training des Prognose-Moduls (**PM**) zuführt, wobei
das Prognose-Modul (**PM**) sich eines baumbasierten Vorhersagemodells zur Bestimmung des die jeweiligen Kenngrößen für die Wirksamkeit des jeweiligen Medien-Objekts enthaltenden Wirkungsvektors **(WV)** aus dem die Eigenschaften des jeweiligen Medien-Objekts enthaltenden Signaturvektor (**SV**) bedient,
und dieses baumbasierte Vorhersagemodell des Prognose-Moduls (**PM**) vermittels der, jeweilig einem in der Datenbank **(MO-DB)** vorrätigen Medien-Obj ekt zugehörigen bekannten Wirkungsvektoren (**BWV**) und der hierzu durch den computerimplementierten Extraktor (**EXT**) jeweils ermittelten Signaturvektoren trainiert wird,
damit nach diesem Training das Prognose-Modul (**PM**) mittels des baumbasierten Vorhersagemodells anhand des jeweiligen Signaturvektors (**SV**) den jeweiligen Wirkungsvektor (**WV**) vermittels des baumbasierten Vorhersagemodells ermitteln kann.

2. Computerimplementiertes Verfahren zum Training eines computerimplementierten Prognose-Moduls (**PM**) zur automatischen Prognose von Wirkungen eines Medien-Objekts (**MO**), **dadurch gekennzeichnet, daß** das computerimplementierte Prognose-Modul (**PM**) nach einer Trainingsphase nach dem Verfahren nach Anspruch 1 ein Abweichungsmaß zwischen den vom Prognose-Modul (**PM**) für das Medien-Objekt aus der Datenbank von vorrätigen Medien-Objekten **(MO-DB)** ermittelten Wirkungsvektoren (**WV**) und den für das jeweilige Medien-Objekt als zutreffend bekannten Wirkungsvektoren (**BWV**) bestimmt und für den Fall, daß das Abweichungsmaß eine Schwelle überschreitet, das Training nach dem Verfahren nach Anspruch 1 solange fortgesetzt wird, bis das Abweichungsmaß die Schwelle nicht mehr überschreitet.

3. Computerimplementiertes Verfahren zum Training eines computerimplementierten Prognose-Moduls (**PM**) zur automatischen Prognose von Wirkungen eines Medien-Objekts (**MO**) nach Anspruch 2, **dadurch gekennzeichnet, daß** das Abweichungsmaß zwischen den vom Prognose-Modul (**PM**) für das Medien-Objekt aus der Datenbank von vorrätigen Medien-Objekten **(MO-DB)** ermitteltem Wirkungsvektoren (**WV**) und den für das jeweilige Medien-Objekt als zutreffend bekannten Wirkungsvektoren (**BWV**) anhand von solchen Medien-Objckten (**NT**-**MO**) aus der Datenbank von vorrätigen Medien-Objekten (**MO-DB**) bestimmt wird, die nicht zum Training des Prognose-Moduls (**PM**) verwendet wurden.

4. Computerimplementiertes Verfahren zum Training eines computerimplementierten Prognose-Moduls **PM**) zur automatischen Prognose von Wirkungen eines Medien-Objekts (**MO**) nach Anspruch 1, 2 oder 3, **dadurch gekennzeichnet, daß** als, auf dem baumbasierten Vorhersagemodell basierendes baumbasiertes Vorhersageverfahren das Verfahren des sogenannten *Gradient Boosting* eingesetzt wird.

5. Computerimplementiertes Verfahren zum Training eines computerimplementierten Prognose-Moduls (**PM**) zur automatischen Prognose von Wirkungen eines Medien-Objekts (**MO**) nach Anspruch 1, 2, 3 oder 4, **dadurch gekennzeichnet, daß** als, auf dem baumbasierten Vorhersagemodell basierendes baumbasiertes Vorhersageverfahren das Verfahren der sogenannten *Random Forests* eingesetzt wird.

6. Computerimplementiertes Verfahren zur automatischen Prognose von Wirkungen eines Medien-Objekts (**MO**) mittels eines computerimplementierte Prognose-Moduls (**PM**), **dadurch gekennzeichnet, daß** das computerimplementierte Prognose-Modul (**PM**)
einen Eingang für einen Signaturvektor (**SV**) aufweist, dessen Element oder Elemente (**E1**, **E2, E3, E4, E5**) die Signatur eines Medien-Objekts (**MO**) darstellt oder darstellen und der von einem computerimplementierten Extraktor (**EXT**) automatisch für das Medien-Objekt (**MO**) ermittelt wird, wobei das jeweilige Vektor-Element (**E1, E2, E3, E4, E5**) des Signaturvektors (**SV**) jeweils ein Maß für eine von dem Extraktor (**EXT**) gemessene, bestimmte, der jeweiligen Position des Vektor-Elements (**E1, E2, E3, E4, E5**) im Signaturvektor (**SV**) entsprechende Eigenschaft des Medien-Objekts (**MO**) darstellt,
einen Ausgang für einen Wirkungsvektor (**WV**) aufweist, der anhand des Signaturvektors (**SV**) vom Prognose-Modul (**PM**) ermittelt wird und dessen jeweiliges Vektor-Element jeweils ein Maß für eine, der Position des Vektor-Elements im Wirkungsvektor (**WV**)\ entsprechende Wirkung des Medien-Objekts (**MO**) darstellt, und
wobei das jeweilige hinsichtlich seiner Wirkungen zu prognostizierende Medien-Objekt (**MO**) dem automatischen Extraktor (**EXT**) zur Analyse zugeführt wird, der hieraus automatisch den zugehörigen Signaturvektor (**SV**) ermittelt und diesen dem Eingang des Prognose-Moduls (**PM**) für den Signaturvektor (**SV**) zuführt, und
das Prognose-Modul (**PM**) anhand des Signaturvektors (**SV**) am Eingang den zugehörigen Wirkungsvektor (**WV**) ermittelt, wobei
das Prognose-Modul (**PM**) sich eines baumbasierten Vorhersagemodells zur Bestimmung des die jeweiligen Kenngrößen für die Wirksamkeit des jeweiligen Medien-Objekts (**MO**) enthaltenden Wirkungsvektors (**WV**) aus dem die Eigenschaften des jeweiligen Medien-Objekts (**MO**) enthaltenden Signaturvektors (**SV**) bedient und zuvor vermittels des computerimplementierten Verfahrens zum Training eines computerimplementierten Prognose-Moduls (**PM**) zur automatischen Prognose von Wirkungen eines Medien-Objekts (**MO**) nach Anspruch 1, 2 oder 3 anhand einer Datenbank von vorrätigen Medien-Objekten (**MO-DB**) denen jeweils ein hinsichtlich der Wirkung des jeweiligen Medien-Objekts als zutreffend bekannter Wirkungsvektor (**BWV**) zugeordnet ist, trainiert wurde.

7. Computerimplementiertes Verfahren zur automatischen Prognose von Wirkungen eines Medien-Objekts (**MO**) nach Anspruch 6, **dadurch gekennzeichnet, daß** als, auf dem baumbasierten Vorhersagemodell basierendes baumbasiertes Vorhersageverfahren das Verfahren des sogenannten *Gradient Boosting* eingesetzt wird.

8. Computerimplementiertes Verfahren zur automatischen Prognose von Wirkungen eines Medien-Objekts (**MO**) nach Anspruch 6, **dadurch gekennzeichnet, daß** als, auf dem baumbasierten Vorhersagemodell basierendes baumbasiertes Vorhersageverfahren das Verfahren der sogenannten *Random Forests* eingesetzt wird.

9. Computersystem mit zumindest einem Prozessor und einem Speicher, **dadurch gekennzeichnet, daß** es zur Ausführung von zumindest einem Verfahren nach einem der Ansprüche 1 bis 8 eingerichtet ist.

10. Computerprogramm, **dadurch gekennzeichnet, daß** es, wenn es auf einem Computersystem ausgeführt wird, zumindest ein Verfahren nach einem der Ansprüche 1 bis 8 ausführt.
